# EUROPÄISCHE PATENTANMELDUNG

(11) **EP 0 703 200 A1**
(43) Veröffentlichungstag der Anmeldung: **27.03.1996**
(21) Anmeldenummer: 95111656.5
(22) Anmeldetag: 25.07.1995
(51) Int. Cl.: C04B 40/06, F16B 13/14

(54) **Aushärtbare Mörtelmasse**

(30) Priorität: 15.09.1994 DE 4432879
(71) Anmelder: fischerwerke Artur Fischer GmbH & Co. KG, D-72178 Waldachtal (DE)
(72) Erfinder: Arnold, Norbert, Dr., D-72178 Waldachtal (DE); Haug, Willi, D-72250 Freudenstadt-Musbach (DE)

(57) **Zusammenfassung**

Es wird eine aushärtbare, aus den getrennt gehaltenen Komponenten Wasser und mineralischem Mörtel bestehende Mörtelmasse zu Befestigung von Verankerungselementen in einem Ankergrund vorgeschlagen, bei der die Komponente mineralischer Mörtel mit einem gegenüber dem Mörtel inerten flüssigen Lösungsmittel angeteigt ist. Dadurch wird die Schüttdichte des Mörtels auf das 3- 4fache erhöht und eine Propfenbildung bei der Verarbeitung der Mörtelmasse vermieden.

## Beschreibung

Die Erfindung betrifft eine aushärtbare, aus den in einer Patrone oder Kartusche getrennt gehaltenen Komponenten Wasser und mineralischem Mörtel bestehende Mörtelmasse zur Befestigung von Verankerungselementen in einem Ankergrund.

Eine aus der EP-A 502 348 bekannte Patrone für einen Verbundanker weist als eine Komponente einen mineralischen Mörtel und als andere Komponente Wasser auf, wobei sich wegen der geringen Dichte des Mörtels und demzufolge dem hohen Volumenanteil der Mörtel in dem größeren Außenbehälter und das Wasser im kleineren Innenbehälter befinden.

Für die Verarbeitung von Mörtelmassen sind auch Kartuschen bekannt, die entweder nur den mineralischen Mörtel oder in einer Zweikammerkartusche beide Komponenten der Mörtelmasse getrennt voneinander enthalten. Die Vermischung der beiden Komponenten erfolgt entweder in der Kartusche durch Zuleeren von Wasser oder bei der Zweikomponentenkartusche durch Auspressen der beiden Komponenten durch eine Mischdüse..

Aufgrund der geringen Schüttdichte des mineralischen Mörtels ist ein großvolumiges Behältnis erforderlich, das in einem sehr ungünstigen Verhältnis zu dem Verfüllvolumen nach dem Mischen der beiden Komponenten steht. Wegen des ungleichen Volumenverhältnisses zwischen den beiden Komponenten und der hohen Affinität zwischen Mörtel und Wasser tritt beim Mischen und Auspressen der beiden Komponenten aus einer Kartusche Propfenbildung auf, die in der Mischdüse zu Verstopfungen neigt. Beim Einbringen der beiden Komponenten mittels einer Patrone in das zu verfüllende Bohrloch kann ebenfalls durch Propfenbildung im Bohrloch das Eintreiben des Verbundankers behindert bzw. vollständig blockiert werden.

Der Erfindung liegt die Aufgabe zugrunde, bei einer auf den beiden Komponenten Wasser und mineralischem Mörtel basierenden Mörtelmasse die Schüttdichte des Mörtels zu erhöhen und beim Vermischen der beiden Komponenten eine Propfenbildung zu vermeiden.

Erfindungsgemäß wird diese Aufgabe durch die im Anspruch 1 angegebenen Merkmale gelöst. Durch das Anteigen des mineralischen Mörtels mit einem gegenüber dem Mörtel inerten flüssigen Lösungsmittel wird die Schüttdichte auf das 3- 4fache erhöht. Damit kann eine wesentlich größere Menge des Mörtels in dem bisherigen Kartuschen- bzw. Patronenvolumen untergebracht werden, was den Verpackungsanteil und gleichzeitig auch den Montageaufwand reduziert. Ferner wird durch die Angleichung der Dichte der beiden Komponenten und durch das günstigere Fließverhalten des angeteigten mineralischen Mörtels eine Propfenbildung vermieden. Damit ist die erfindungsgemäße Mörtelmasse besonders für das Injektionsverfahren mit einer Kartusche und aufgesetzter Mischdüse geeignet.

Als besonders vorteilhaft zum Anteigen des mineralischen Mörtels haben sich wasserunlösliche, unpolare Lösungsmittel erwiesen. Durch den Gegensatz zwischen polarem Mörtel und unpolarem Lösungsmittel wird beim Vermischen des angeteigten Mörtels mit der Wasserkomponente das Lösungsmittel spontan aus der Mörtelmasse verdrängt. Damit läuft der Aushärtvorgang der Mörtelmasse unbeeinflußt von dem Lösungsmittel ab, so daß kein Festigkeitsverlust nach Abschluß des Aushärtevorganges auftritt. Wasserunlösliche, unpolare Lösungsmittel sind üblicherweise gesättigte Kohlenwasserstoffe, beispielsweise Alkane wie Hexan oder Heptan, Ether, Chlorkohlenwasserstoffe wie Dichlormethan, Fluorkohlenwasserstoffe, Fluorchlorkohlenwasserstoffe und flüchtige Silikone.

Der Anteil des Lösungsmittels am Mörtel kann 5 - 50, vorzugsweise 15 - 30 Gewichtsprozent betragen.

Um den Mischvorgang sowohl in der Kartusche als auch bei Verwendung einer Zweikammerpatrone noch günstiger zu gestalten ist es möglich die Wasserkomponente mit einem Thixotropiermittel derart einzustellen, daß sie sich ohne Einwirkung von Scherkräften pastös verhält. Diese Lösung vermeidet insbesondere bei der Patrone nach dem Zerstören mit dem Verbundanker, daß die Wasserkomponente abfließt. Erst beim Mischen der beiden Komponenten mit dem Verbundanker und den dabei auftretenden Scherkräften wird die Viskosität der Wasserkomponente entsprechend dem Vorschub des Verbundankers im Bohrloch wieder erhöht.
Ein geeignetes Thixotropiermittel ist beispielsweise amorphe, pyrogene Kieselsäure, die der Wasserkomponente mit 0,5% bis 10% zugemischt wird.

Das Thixotropiermittel kann auch durch ein geeignetes Verdickungsmittel (z. B. mod. Cellulose, Acrylsäurepolymere, Polyvinylalkohol oder ähnliche wasserlösliche Polymere) ersetzt werden. Der Mischvorgang ist dabei allerdings weniger günstig als bei Einsatz von Thixotropiermitteln.

### Beispiel 1

### Patrone für Gewindestange M 12 (Bohrlochdurchmesser = 14 mm; Verankerungstiefe = 110 mm)

- Außenpatrone:: Durchmesser: 12,6 mm
Länge: 100 mm
Glas-Dicke: ∼ 0,45 mm
- Inhalt:: Mörtel: 5 g
Lösungsmittel: 2 g Heptan
- Innenpatrone:: Durchmesser: 7 mm
Glas-Dicke: ∼ 0,4 mm
Länge: ∼ 90 mm
- Inhalt:: Wasser: 2 g mod. (bestehend aus 100 g Wasser + 7 g pyrogene Kieselsäure)

### Beispiel 2

### Zweikammer-Kartusche mit Mischdüse Gesamtvolumen. 410 ml

- Kammer A:: 500 g Mörtel
150 g Silikonöl (Octamethylcyclotetrasiloxan)
- Kammer B:: 100 g Wasser
- Volumenverhältnis A :: B = 3,1:1

## Patentansprüche

1. Aushärtbare, aus den in einer zerstörbaren Patrone oder Kartusche getrennt gehaltenen Komponenten Wasser und mineralischem Mörtel bestehende Mörtelmasse zur Befestigung von Verankerungselementen in einem Ankergrund, **dadurch gekennzeichnet,** daß der mineralische Mörtel mit einem gegenüber dem Mörtel inerten flüssigen Lösungsmittel angeteigt ist.

2. Mörtelmasse nach Anspruch 1, **dadurch gekennzeichnet,** daß ein wasserunlösliches, unpolares Lösungsmittel verwendet wird.

3. Mörtelmasse nach Anspruch 1, **dadurch gekennzeichnet**, daß der Anteil des Lösungsmittels im Mörtel 5 - 50 vorzugsweise 15 - 30 Gewichtsprozent beträgt.

4. Mörtelmasse nach Anspruch 1, **dadurch gekennzeichnet**, daß die Wasserkomponente mit einem Thixotropiermittel derart eingestellt ist, daß sie sich ohne Einwirkung von Scherkräften pastös verhält.
